# FASCICULE DE BREVET EUROPEEN

(11) **EP 3 290 286 B1**
(45) Date de publication et mention de la délivrance du brevet: **02.12.2020**
(21) Numéro de dépôt: 17189156.7
(22) Date de dépôt: 04.09.2017
(51) Int. Cl.: B61D 17/02, B61D 27/00

(54) **VOITURE D'EXTRÉMITÉ DE VÉHICULE FERROVIAIRE ET VÉHICULE FERROVIAIRE ASSOCIÉ**
ENDWAGEN EINES SCHIENENFAHRZEUGS, UND ENTSPRECHENDES SCHIENENFAHRZEUG
END CAR OF A RAIL VEHICLE AND ASSOCIATED RAIL VEHICLE

(30) Priorité: 06.09.2016 FR 1658264
(43) Date de publication de la demande: 07.03.2018
(73) Titulaire: ALSTOM Transport Technologies, 93400 Saint-Ouen (FR)
(72) Inventeur: DO, Huu-Thi, 17300 Rochefort (FR)
(74) Mandataire: Lavoix

(56) Documents cités:
- DE-A1- 4 012 277
- JP-A- H05 262 226
- JP-A- H05 270 402
- JP-A- H08 183 451
- JP-A- 2005 145 205

## Description

La présente invention concerne une voiture d'extrémité pour un véhicule ferroviaire.

Un véhicule ferroviaire, notamment à grande vitesse, est sujet à un effet de trainée s'opposant au déplacement de ce véhicule ferroviaire. Afin de diminuer cet effet de trainée, on connait déjà, dans l'état de la technique, une voiture d'extrémité munie d'un dispositif de réduction de trainée, modifiant la géométrie de cette voiture d'extrémité. Il est connu du document JP H05 270402 A de faire circuler un flux d'air à travers un véhicule ferroviaire afin de réduire l'amplitude de l'onde de pression générée au passage d'un tunnel. Z

L'invention a notamment pour but de fournir une autre solution pour diminuer l'effet de trainée, sans modifier la forme de la voiture d'extrémité.

A cet effet, l'invention a notamment pour objet une voiture d'extrémité de véhicule ferroviaire, s'étendant entre une première extrémité libre et une seconde extrémité destinée à être raccordée à une autre voiture du véhicule ferroviaire, la voiture d'extrémité comportant un logement inférieur pour un bogie ménagé à proximité de la première extrémité, caractérisée en ce qu'elle comporte au moins un conduit sensiblement horizontal, débouchant d'une part dans le logement inférieur, et débouchant d'autre part à la première extrémité de la voiture, et des moyens de mise en circulation d'air dans le conduit.

En forçant la circulation de l'air dans chaque conduit, on souffle ou on aspire de l'air à la première extrémité de la voiture. Ce dispositif permet une meilleure gestion des flux d'air au sillage de la voiture, et permet donc de réduire l'effet de trainée.

Une voiture d'extrémité selon l'invention peut comporter en outre l'une ou plusieurs des caractéristiques suivantes, prises seules ou selon toute combinaison techniquement envisageable :
- les moyens de mise en circulation d'air sont propres à générer un flux d'air dans le conduit, depuis le logement inférieur vers la première extrémité de la voiture d'extrémité ;
- les moyens de mise en circulation d'air sont propres à générer un flux d'air dans le conduit, depuis la première extrémité de la voiture d'extrémité vers le logement inférieur ;
- les moyens de mise en circulation d'air sont inversibles, entre une première configuration dans laquelle le flux d'air est généré depuis le logement inférieur vers la première extrémité de la voiture d'extrémité, et une seconde configuration dans laquelle le flux d'air est généré depuis la première extrémité de la voiture d'extrémité vers le logement inférieur ;
- les moyens de mise en circulation d'air sont dans la première configuration lorsque la voiture d'extrémité est agencée à l'arrière du véhicule ferroviaire, et dans la seconde configuration lorsque la voiture d'extrémité est agencée à l'avant du véhicule ferroviaire ;
- les moyens de mise en circulation d'air sont propres à prendre la première ou la seconde configurations en fonction des conditions d'exploitation du véhicule ferroviaire ;
- les moyens de mise en circulation d'air comportent des moyens de variation de la vitesse d'un flux d'air généré, en fonction d'une vitesse de déplacement de la voiture d'extrémité ;
- les moyens de mise en circulation d'air comportent au moins un ventilateur ; et
L'invention concerne également un véhicule ferroviaire, comportant au moins une voiture d'extrémité telle que définie précédemment.

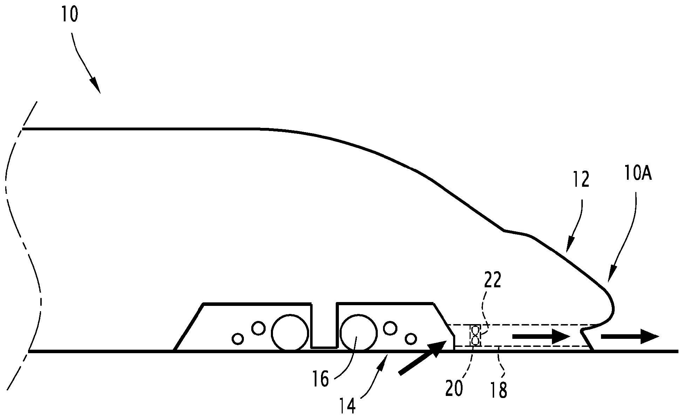

L'invention sera mieux comprise à la lecture de la description qui va suivre, donnée uniquement à titre d'exemple et faite en se référant à la figure unique annexée, représentant schématiquement et partiellement une voiture d'extrémité selon un exemple de mode de réalisation de l'invention.

On a représenté partiellement, sur la figure, une voiture d'extrémité 10, destinée à équiper un véhicule ferroviaire, notamment un train grande ligne. Par exemple, le véhicule ferroviaire comporte une telle voiture d'extrémité 10 à chaque extrémité.

Un véhicule ferroviaire peut habituellement circuler dans deux sens opposés, si bien que chaque voiture d'extrémité 10 peut être une voiture d'extrémité avant ou arrière, en fonction du sens de circulation. Ainsi, les voitures d'extrémités 10 du véhicule ferroviaire sont généralement identiques, si bien qu'une seule va être décrite.

La voiture d'extrémité 10 s'étend, dans une direction longitudinale X, entre une première extrémité libre 10A, et une seconde extrémité 10B destinée à être raccordée à une autre voiture du véhicule ferroviaire. La première extrémité 10A correspond à l'extrémité avant ou arrière du véhicule ferroviaire, en fonction du sens de circulation.

La voiture d'extrémité 10 présente une forme générale aérodynamique, présentant notamment, de manière classique, un profil comprenant une pointe 12 à la première extrémité 10A. Une telle pointe 12 est également appelée « nez » de la voiture d'extrémité 10.

La voiture d'extrémité 10 comporte par ailleurs, de manière classique, un logement inférieur 14 pour un bogie 16. Ce logement inférieur 14 est ménagé à proximité de la première extrémité 10A. En d'autres termes, dans le cas où la voiture d'extrémité 10 comporte plusieurs logements inférieurs pour des bogies, le logement inférieur 14 considéré dans la présente description est celui le plus proche de la première extrémité 10A.

La voiture d'extrémité 10 selon l'invention comporte au moins un conduit 18, débouchant d'une part dans ledit logement inférieur 14, et débouchant d'autre part à la première extrémité 10A de la voiture d'extrémité 10.

Avantageusement, chaque conduit 18 s'étend sensiblement horizontalement. En d'autres termes les extrémités de ce conduit 18 se trouvent sensiblement à la même hauteur. Ainsi, chaque conduit 18 débouche généralement, d'une part dans une partie inférieure de la voiture d'extrémité 10, et plus particulièrement, par exemple, en dessous du nez 12 et, d'autre part, en regard du bogie. Le conduit 18 s'étend donc avantageusement sensiblement à hauteur du bogie.

Par exemple, chaque conduit 18 présente un diamètre compris entre 0,05 m et 0,5 m.

La voiture d'extrémité 10 comporte des moyens 20 de mise en circulation d'air dans le conduit 18. Les moyens de mise en circulation d'air 20 comportent par exemple au moins un ventilateur 22.

De préférence, les moyens de mise en circulation d'air 20 sont inversibles, entre une première configuration dans laquelle le flux d'air est généré depuis le logement inférieur 14 vers la première extrémité 10A de la voiture d'extrémité 10 (cette première configuration étant représentée sur la figure), et une seconde configuration dans laquelle le flux d'air est généré depuis la première extrémité 10A de la voiture d'extrémité 10 vers le logement inférieur 14.

Ainsi, dans la première configuration, le conduit 18 expulse de l'air à la première extrémité 10A, et dans la seconde configuration, le conduit 18 aspire de l'air à la première extrémité 10A.

Dans ce cas, le ventilateur 22 est un ventilateur bidirectionnel.

Conformément à une variante, les moyens de mise en circulation d'air 20 sont uniquement propres à générer un flux d'air dans le conduit 18, depuis le logement inférieur 14 vers la première extrémité 10A de la voiture d'extrémité 10.

Conformément à une autre variante, les moyens de mise en circulation d'air 20 sont uniquement propres à générer un flux d'air dans le conduit 18, depuis la première extrémité 10A de la voiture vers le logement inférieur 14.

Toutefois, le mode de réalisation dans lequel les moyens de mise en circulation d'air 20 peuvent prendre les première et seconde configurations est préféré, car dans ce cas, la configuration peut être choisie en fonction des conditions d'exploitation du véhicule ferroviaire.

Les conditions d'exploitation du véhicule ferroviaire comprennent, par exemple, la vitesse du véhicule ferroviaire, la température extérieure au véhicule ferroviaire, l'orientation du vent dans l'environnement extérieur du train...

En variante, les moyens de mise en circulation d'air 20 sont configurés pour prendre les première et seconde configurations en fonction du sens de circulation du véhicule ferroviaire.

Dans cette variante, lorsque la première extrémité 10A est à l'avant du véhicule ferroviaire, les moyens de mise en circulation d'air 20 peuvent être dans la seconde configuration, aspirant de l'air depuis la première extrémité 10A de la voiture vers le logement inférieur 14, et lorsque la première extrémité 10A est à l'arrière du véhicule ferroviaire, les moyens de mise en circulation d'air 20 peuvent être dans la première configuration, expulsant de l'air par la première extrémité 10A.

Cette aspiration ou expulsion d'air à la première extrémité 10A a pour effet de modifier le comportement de l'air en avant et/ou en arrière du véhicule ferroviaire, réduisant alors l'effet de trainée.

Avantageusement, les moyens de mise en circulation d'air 20 comportent des moyens de variation de la vitesse d'un flux d'air généré, en fonction d'une vitesse de déplacement de la voiture d'extrémité 10. La vitesse du flux d'air dépend de la vitesse de rotation du ventilateur 22, si bien que les moyens de variation agissent sur ce ventilateur 22.

La vitesse du flux d'air est ainsi adaptée à la vitesse de déplacement de la voiture 10, afin d'optimiser la réduction de la trainée.

Avantageusement, la vitesse du flux d'air est modifiée en temps réel, en fonction de la vitesse instantanée de la voiture d'extrémité 10. A cet effet, on peut prévoir une automatisation par boucle de contrôle active, de type connu en soi.

La présente invention permet, en agissant sur les flux d'air en avant et/ou en arrière du véhicule ferroviaire, de réduire la trainée de ce véhicule ferroviaire.

On notera que l'invention n'est pas limitée au mode de réalisation précédemment décrit, mais pourrait présenter diverses variantes complémentaires.

## Revendications

1. Voiture d'extrémité (10) de véhicule ferroviaire, s'étendant entre une première extrémité libre (10A) et une seconde extrémité destinée à être raccordée à une autre voiture du véhicule ferroviaire, la voiture d'extrémité (10) comportant un logement inférieur (14) pour un bogie (16) ménagé à proximité de la première extrémité (10A), **caractérisée en ce qu'**elle comporte :
- au moins un conduit (18) sensiblement horizontal, débouchant d'une part dans le logement inférieur (14), et débouchant d'autre part à la première extrémité (10A) de la voiture d'extrémité (10), et
- des moyens de mise en circulation d'air (20) dans le conduit (18).

2. Voiture d'extrémité selon la revendication 1, dans laquelle les moyens de mise en circulation d'air (20) sont propres à générer un flux d'air dans le conduit (18), depuis le logement inférieur (14) vers la première extrémité (10A) de la voiture d'extrémité (10).

3. Voiture d'extrémité selon la revendication 1 ou 2, dans laquelle les moyens de mise en circulation d'air (20) sont propres à générer un flux d'air dans le conduit (18), depuis la première extrémité (10A) de la voiture d'extrémité (10) vers le logement inférieur (14).

4. Voiture d'extrémité selon les revendications 2 et 3 prises en combinaison, dans laquelle les moyens de mise en circulation d'air (20) sont inversibles, entre une première configuration dans laquelle le flux d'air est généré depuis le logement inférieur (14) vers la première extrémité (10A) de la voiture d'extrémité (10), et une seconde configuration dans laquelle le flux d'air est généré depuis la première extrémité (10A) de la voiture d'extrémité (10) vers le logement inférieur (14).

5. Voiture d'extrémité selon la revendication 4, dans laquelle les moyens de mise en circulation d'air (20) sont dans la première configuration lorsque la voiture d'extrémité (10) est agencée à l'arrière du véhicule ferroviaire, et dans la seconde configuration lorsque la voiture d'extrémité (10) est agencée à l'avant du véhicule ferroviaire.

6. Voiture d'extrémité selon la revendication 4, dans laquelle les moyens de mise en circulation d'air (20) sont propres à prendre la première ou la seconde configurations en fonction des conditions d'exploitation du véhicule ferroviaire.

7. Voiture d'extrémité selon l'une quelconque des revendications précédentes, dans laquelle les moyens de mise en circulation d'air (20) comportent des moyens de variation de la vitesse d'un flux d'air généré, en fonction d'une vitesse de déplacement de la voiture d'extrémité (10).

8. Voiture d'extrémité selon l'une quelconque des revendications précédentes, dans laquelle les moyens de mise en circulation d'air (10) comportent au moins un ventilateur (22).

9. Véhicule ferroviaire, **caractérisé en ce qu'**il comporte au moins une voiture d'extrémité (10A) selon l'une quelconque des revendications précédentes.

## Patentansprüche

1. Endwagen (10) eines Schienenfahrzeugs, der sich zwischen einem ersten, freien Ende (10A) und einem zweiten Ende erstreckt, das dazu bestimmt ist, mit einem anderen Wagen des Schienenfahrzeugs verbunden zu werden, wobei der Endwagen (10) aufweist eine untere Unterbringung (14) für ein Drehgestell (16), die in der Nähe des ersten Endes (10A) angeordnet ist, **dadurch gekennzeichnet, dass** er aufweist:
- wenigstens einen im Wesentlichen horizontalen Kanal (18), der einerseits in der unteren Unterbringung (14) ausmündet und der andererseits am ersten Ende (10A) des Endwagens (10) ausmündet, und
- Mittel zum Zirkulieren von Luft (20) im Kanal (18).

2. Endwagen gemäß Anspruch 1, wobei die Mittel zum Zirkulieren von Luft (20) imstande sind, einen Luftstrom in dem Kanal (18) zu erzeugen von der unteren Unterbringung (14) aus zu dem ersten Ende (10A) des Endwagens (10) hin.

3. Endwagen gemäß Anspruch 1 oder 2, wobei die Mittel zum Zirkulieren von Luft (20) imstande sind, einen Luftstrom in dem Kanal (18) zu erzeugen von dem ersten Ende (10A) des Endwagens (10) aus zu der unteren Unterbringung (14) hin.

4. Endwagen gemäß den Ansprüchen 2 und 3 in Kombination, wobei die Mittel zum Zirkulieren von Luft (20) umkehrbar sind zwischen einer ersten Konfiguration, in welcher der Luftstrom erzeugt wird von der unteren Unterbringung (14) aus zu dem ersten Ende (10A) des Endwagens (10) hin, und einer zweiten Konfiguration, in welcher der Luftstrom erzeugt von dem ersten Ende (10A) des Endwagens (10) aus zu der unteren Unterbringung (14) hin.

5. Endwagen gemäß Anspruch 4, wobei die Mittel zum Zirkulieren von Luft (20) in der ersten Konfiguration sind, wenn der Endwagen (10) am Heck des Schienenfahrzeugs angeordnet ist, und in der zweiten Konfiguration sind, wenn der Endwagen (10) an der Front des Schienenfahrzeugs angeordnet ist.

6. Endwagen gemäß Anspruch 4, wobei die Mittel zum Zirkulieren von Luft (20) imstande sind, die erste oder die zweite Konfiguration einzunehmen in Abhängigkeit von Betriebsbedingungen des Schienenfahrzeugs.

7. Endwagen gemäß irgendeinem der vorhergehenden Ansprüche, wobei die Mittel zum Zirkulieren von Luft (20) aufweisen Mittel zum Variieren der Geschwindigkeit eines erzeugten Luftstroms in Abhängigkeit von einer Verlagerungsgeschwindigkeit des Endwagens (10).

8. Endwagen gemäß irgendeinem der vorhergehenden Ansprüche, wobei die Mittel zum Zirkulieren von Luft (10) wenigstens ein Gebläse (22) aufweisen.

9. Schienenfahrzeug, **dadurch gekennzeichnet, dass** es aufweist wenigstens einen Endwagen (10A) gemäß irgendeinem der vorhergehenden Ansprüche.

## Claims

1. An end carriage (10) of a railway vehicle, extending between a first free end (10A) and a second end intended to be connected to another carriage of the railway vehicle, the end carriage (10) including a lower housing (14) for a bogie (16) made in proximity to the first end (10A), **characterized in that** it includes:
- at least one substantially horizontal conduit (18), opening on the one hand into the lower housing (14), and opening on the other hand into the first end (10A) of the end carriage (10), and
- means for circulating air (20) in the conduit (18).

2. The end carriage according to claim 1, wherein the means for circulating air (20) are able to generate an air flow in the conduit (18), from the lower housing (14) to the first end (10A) of the end carriage (10).

3. The end carriage according to claim 1 or 2, wherein the means for circulating air (20) are able to generate an air flow in the conduit (18), from the first end (10A) of the end carriage (10) towards the lower housing (14).

4. The end carriage according to claims 2 and 3 taken as a combination, wherein the means for circulating air (20) are reversible, between a first configuration in which the air flow is generated from the lower housing (14) towards the first end (10A) of the end carriage (10), and a second configuration in which the air flow is generated from the first end (10A) of the end carriage (10) towards the lower housing (14).

5. The end carriage according to claim 4, wherein the means for circulating air (20) are in the first configuration when the end carriage (10) is laid out at the rear of the railway vehicle, and in the second configuration when the end carriage (10) is laid out at the front of the railway vehicle.

6. The end carriage according to claim 4, wherein the means for circulating air (20) are able to assume the first or the second configurations depending on the operating conditions of the railway vehicle.

7. The end carriage according to any of the preceding claims, wherein the means for circulating air (20) include means for varying the speed of a generated air flow, according to a speed of displacement of the end carriage (10).

8. The end carriage according to any of the preceding claims, wherein the means for circulating air (10) include at least one fan (22).

9. A railway vehicle, **characterized in that** it includes at least one end carriage (10A) according to any of the preceding claims.
